# EUROPEAN PATENT APPLICATION

(11) **EP 1 361 466 A2**
(43) Date of publication of application: **12.11.2003**
(21) Application number: 03396022.0
(22) Date of filing: 13.03.2003
(51) Int. Cl.: G02B 6/44, G02B 6/46

(54) **Transport box and method for storing optical fiber components**

(30) Priority: 13.03.2002 FI 20020466
(71) Applicant: Tellabs Oy, 02630 Espoo (FI)
(72) Inventor: Jamsa, Llona, FIN-02400 Kirkkonummi (FI)
(74) Representative: Brax, Matti Juhani

(57) **Abstract**

The invention relates to a method and apparatus for storing optical fiber components in order, so that the components are kept undamaged. The method includes steps where the component part (504) of the optical fiber component is placed in a detachable clamp (400, 400b) which is fastened to an elongate support element (14) provided on the bottom part (11) of the substrate, and where the optical fiber part (505) of the optical fiber component is placed in support members (13) located on the bottom part (11), which support members support and guide the optical fiber part, so that it is placed within the area located on the bottom part (11) and bordered by a wall-like edge part (12).

## Description

The invention relates to a method and device for storing optical fiber components in order, so that the components remain undamaged.

In optical fiber information proceeds as light pulses along a glass or plastic cable or fiber. Through an optical fiber, there can be transmitted much more data than for instance in a traditional copper cable, and with optical fiber, electric or magnetic interference is nearly nonexistent. The transmission of a signal through optical fiber requires that in the optical fiber, there are installed reproduction or amplification devices at given intervals. In addition, optical fiber is more sensitive and must be protected better than for example copper. Optical fiber cable is used for example in the long-distance lines of most telephone companies. Likewise, at the junctions of data transmission networks there are used devices, the operation of which is essentially based on signal transmission through optical fiber. In these devices, there are typically installed optical fiber components. In optical fiber components, the fiber part or tail, meant for transmitting the signal and connecting the component to the device, is made of optical fiber. The corresponding part in an electronic component, the so-called leg or wire, is made of electroconductive metal.

Generally devices that contain a lot of various small optical or electronic components are compiled in an extremely precise manner, in a given order, component by component. Typically the required components are fetched to a given workplace for instance from storage. The fetched components are pretreated in the workplace prior to their proper usage, i.e. the assembly of the product. Pretreatment here means all procedures that the component fetched from storage is subjected to before it is ready for use. First the packed component is unpacked from the wrappings. At the same time it can be written for instance in a loss table or the like that one of said components is taken into use. In addition, the serial number of the component is written down, and often also the name of the user who performs the work. Thereafter the optical fiber tails of the optical fiber component are opened and colored in order to be better distinguishable between themselves and in order to be traceable afterwards. Finally the optical fiber tails are cut into suitable size for future use. Before the proper usage, the optical fiber components can also be tested. This ensures that they function in the expected manner and at an expected efficiency.

The treatment and assembly of optical fiber components is a work that requires extreme precision. Optical fiber components are sensitive, and for safety reasons they should generally not be moved after unpacking. The moving of an unpacked optical fiber component is a high risk for the functionality of the optical fiber component. In addition, all extra strain and bending must be avoided when dealing with optical fiber components. Particularly the optical fiber tail is easily breakable, and even if the tail is not cut off, excessive bending may cause fractions in the fiber and thereby attenuation of the light signals passing through. This in turn deteriorates the quality of the optical fiber component. Consequently, quality control is important when treating optical fiber components. Generally all phases of every optical fiber component can later be traced accurately, when it is known which component is installed in which device and by whom. Moreover, the quality information of the components is written down in connection with testing.

Because the compilation of optical fiber components is a demanding job, it is carried out by experts. Quality control and pretreatment form part of this work. Said preparatory operations take up a large share of a highly trained employer's work time. Meanwhile, expensive machines used in the assembly work stand useless. The pretreatment and quality control of optical fiber components slow down the process as a whole and increase expenses.

The object of the invention is to perform the assembly step, where optical fiber components are treated efficiently and so that the components remain undamaged.

The object is achieved so that the pretreatment and component quality control are carried out as a process separate from the proper assembly.

The invention is characterized by what is set forth in the independent claims. Preferred embodiments of the invention are described in the dependent claims.

The assembly work of optical fiber components can be made essentially faster if the optical fiber components are pretreated and tested separately from the assembly process. Thus the optical fiber components are obtained in the assembly step as ready for use. The problem here has been the fact that optical fiber components are extremely sensitive, and therefore it has not been desirable to move or shift them at all apart from what is absolutely necessary. By means of the substrate according to the invention, the preparatory treatment of optical fiber components can be carried out separately from the assembly step. The substrate according to the present invention serves as a temporary storage, treatment and transport bed for optical fiber components. On the substrate according to the invention, there can be placed for instance the components needed in a given assembly step, readily arranged in the order where they should be used.

The substrate according to the invention is used for protecting optical fiber components during their transportation and processing. On the substrate according to the invention, optical fiber components can be transported from the component storage of the assembly plant to the proper assembly site safely and without damaging them. Thus the optical fiber components provided on the substrate are meant for a given device, to be installed on a given assembly site. Optical fiber components can be tested before they are placed on the substrate. Thus it can be ensured already in advance that an optical fiber component to be transported as far as the assembly site meets the quality requirements set for it. In the pretreatment step, there may be several substrates according to the invention to be filled simultaneously, in which case the tester of the optical fiber components may choose on which substrate he places a given component. The purpose is to choose the components for a given substrate so that an optimal performance per substrate is achieved. In addition, the optical fiber components are easily kept in the right order by means of the substrate.

The substrate according to the invention is easy to handle. Moreover, the treatment of a single optical fiber component becomes easier, for instance when testing. The optical fiber components placed on the substrate also are easily distributed so that their total attenuation is kept on a nearly standard level on each substrate. This early distribution of the components enables an efficient serial production.

In the following the invention and its preferred embodiments are described in more detail with reference to the appended drawings, where
- figure 1a: illustrates a top view of a substrate according to a preferred embodiment of the invention,
- figure 1b: illustrates a side view of a substrate according to a preferred embodiment of the invention,
- figures 2a, 2b: illustrate support members according to preferred embodiments of the invention,
- figures 3a, 3b: illustrate support elements according to preferred embodiments of the invention,
- figures 4a, 4b: illustrate component clamps according to preferred embodiments of the invention, and
- figure 5: is a flow diagram illustrating a method according to a preferred embodiment of the invention.

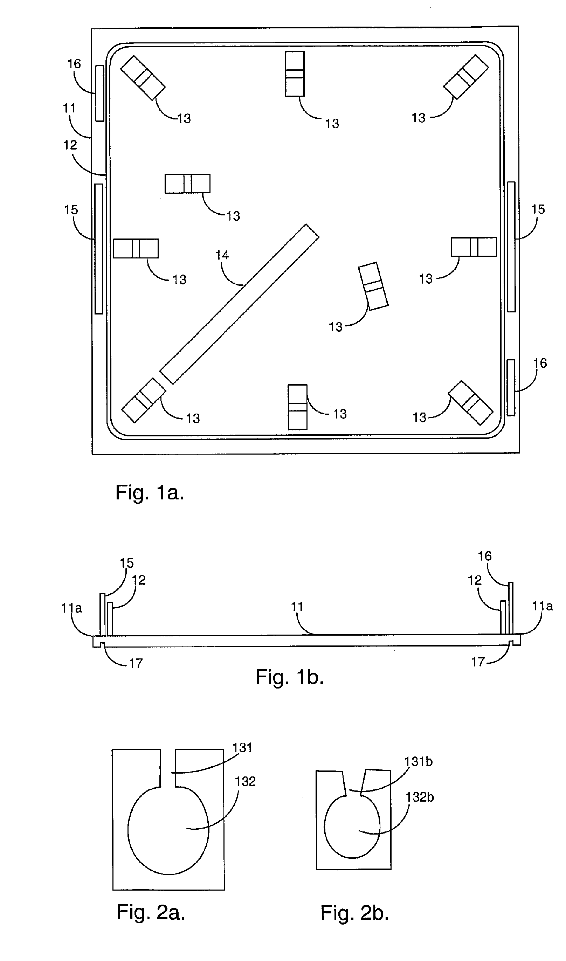

Figure 1a shows a substrate according to a preferred embodiment of the invention, seen from the top. In the support element 14 of the substrate, there is further attached a clamp (not illustrated in figure 1) in which the proper component part of the optical fiber component to be placed on the substrate is solidly placed. Then the optical fiber tails starting from the component part are arranged to run along the circumference created by the substrate edge part 12. The optical fiber component tails are maintained undamaged on the circumference, when the periphery is large enough, so that the optical fiber tails need not bend too much. The optical fiber tails remain in the determined places and routes by means of collecting support members 13. Advantageously the outermost support members 13 forming the largest circumference are on one side attached to the substrate edge part 12. Thus the edge part 12 also supports the support members and facilitates the alignment thereof. In addition, the largest possible area of the substrate can thus be utilized.

The outermost part of the substrate illustrated in figure 1a is the plate-like bottom part 11 of the substrate. In this embodiment, the bottom part 11 is square in shape. On top of the bottom part 11, there is provided the edge part 12, typically rounded at the edges; the optical fiber components are kept inside the area surrounded by said edge part 12. The edge part 12 is narrowish and advantageously a few centimeters high from the bottom upwards. Typically the height of the edge part is about 5 centimeters. The edge part 12 forms an obstacle for the fiber elements of the optical fiber components, over which obstacle they do not slide along the substrate bottom part 11. Thus the edge part 12 forms a kind of a tray or an arc, inside which even the long tails of the optical fiber components remain.

In addition, the preferred embodiment illustrated in figure 1a includes an elongate support element 14 with a longitudinal slot or groove in the middle. In said longitudinal slot of the support element 14, there is set a separate clamp, in which the optical fiber components are fastened. The clamp to be installed is detachable, so that there can be provided several different clamps for various component combinations, and worn clamps can be replaced by new ones.

In the embodiment of figure 1a, on the substrate according to the invention, there are installed ten support members 13 that hold the optical fiber tails collected therein in place and in order. The support members 13 are fastened at certain places on the substrate, so that they support the optical fiber tails to be placed therein in the best possible way. By means of said support members, the tails of the optical fiber components are guided in a given place, order and position, so that they remain undamaged. An optical fiber tail is arranged to pass through the support members 13 along a circumference with a sufficiently long radius, so that the tail parts of the optical fiber components are neither bent excessively nor broken and cut.

In the embodiment of figure 1a, the bottom part 11 is further provided, outside the area defined by the edge part 12, handles 15, by which the substrate according to the invention is easily and safely moved, as well as stacking pins 16 that support the substrates when stacking them on top of each other.

Figure 1b illustrates a substrate according to a preferred embodiment as seen from the side. In figure 1b, the bottom part 11 and the edge part 12 forming the side edges for the substrate correspond to the bottom part 11 and edge parts 12 illustrated in figure 1a. In shape, the bottom part 11 may be for instance square, rectangular or a roundish structure with several angles. Typically the edge part 12 conforms to the shape of the bottom part 11, although it generally does not extend as far as the outer edge of the bottom part 11. The edge part 12 and the bottom part 11 are typically made of the same material. The bottom part 11 extends to outside, 11a, of the area defined by the edge part 12. On this surface 11a, there can for instance be attached the handles or similar gripping elements 15 that facilitate the shifting and lifting of the substrate. In addition, the surface 11a may be provided with so-called stacking pins 16 that fit in the corresponding apertures or holes 17 provided on the bottom surface of the substrate. Substrates can be safely stacked on top of each other, when the stacking pin 16 of a lower substrate is set in the pin hole 17 of the upper substrate. The stack is solidly set, and the substrates do not slide with respect to each other.

Figure 2a illustrates a support member 13 according to a preferred embodiment, seen from the side. In this embodiment the slot part 131 is an elongate, straight neck leading to the storage part 132. Typically the support member 13 is provided with a narrow slot part 131 through which the optical fiber tail is easily removed and set in the larger storage part 132 of the support member 13. Advantageously the slot part 131 of the support member is sufficiently wide in order to enable the optical fiber tails to proceed easily through it to the larger storage part 132 and away therefrom.

On the other hand, the slot part 131 is advantageously sufficiently narrow, in order to prevent the optical fiber tails placed in the storage part 132 from being accidentally released from the support member 13.

The slot part 131b of the support member 13 of the preferred embodiment illustrated in figure is an elongate, downwardly narrowing neck. In this embodiment, the optical fiber tails are kept more securely in the storage part 132b, even if the slot part 131b is practically wide, because the slot part 131b is funnel-like in shape. The storage part 132b is sufficiently large, so that the optical fiber tails passing through it are set therein in an airy manner. Said non-compact arrangement makes it easier to remove the optical fiber components from the substrate. Typically the support member 13 is highly shape-permanent, in order to provide a good support for the optical fiber tail. According to a preferred embodiment, the support member is elastic, so that the placing and removing of the optical fiber tails is carried out easily and does not damage the optical fiber tail. A support member according to another embodiment has a solid structure and is made of for example hard, non-resilient plastic. All edge parts of the support members according to the preferred embodiments of the invention are rounded in order to prevent any sharp elements from damaging the fiber, and to prevent the fibers from being, even momentarily, caught or attached to the edge parts.

Figure 3a illustrates a support element 14 according to a preferred embodiment of the invention. In this embodiment, the support element is an U-shaped, angular groove with a bottom part 141 and sidewalls 142. In addition, the sidewall of the support element 14 in figure 3a is provided with holes 143 for the fastening pins. By means of the fastening pins, the support element 14 is provided with a clamp in which the component parts of the optical fiber components to be placed on the substrate are supported. The fastening pins 143 can be pressed in the slots made in the clamp set in the support element, or the fastening pins can be attached through the support element 14 and the clamp. There are several alternative ways of fastening, and according to the invention, any possible and detachable way of fastening can be employed.

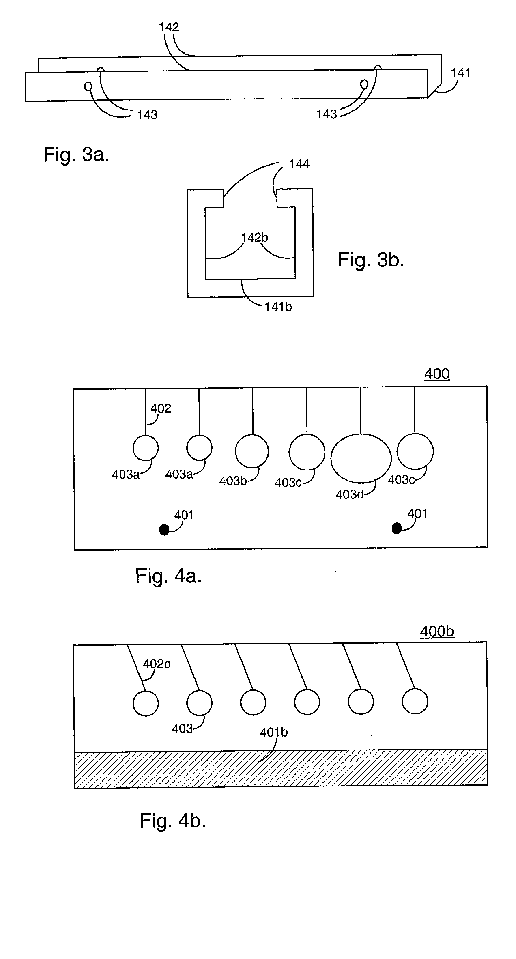

Figure 3b illustrates the end profile of the support element 14 according to another preferred embodiment. This embodiment includes a bottom part 141b and sidewalls 142b, which at the bottom edge are attached to the bottom part 141b and at the top edge are curved 144 in the direction of the bottom part. This kind of structure prevents the clamp set in the support element 14 from sliding out in the vertical direction (upwardly in the drawing) from the groove of the support element 14. In the support element 14 of this embodiment, the clamp is set in place by sliding it along the support element 14. The longitudinal ends of the support element 14 are advantageously provided with a suitable locking element or stop that prevents the longitudinal movement of the clamp with respect to the support element 14. Advantageously the support elements 14 are made of a rigid material, for instance hard plastic or metal.

Figure 4a illustrates a clamp 400 according to a preferred embodiment of the invention, in which clamp the rigid, functional component part of the optical fiber components is set. In this embodiment, the bottom edge of the clamp is provided with apertures or through holes 401, whereby the clamp is fastened in the support element 14 of the substrate according to the invention. The top edge of the clamp is provided with slits or incisions 402, through which the optical fiber components are pressed when they are set in the designated holes 403a, 403b, 403c, 403d. The size of the hole may vary according to the size of the component set therein. The holes are arranged in the clamp in such a way and at such a height that the optical fiber components set in the holes do not touch the support element 14, to which the clamp 400 is fastened. The clamp 400 according to this preferred embodiment of the invention supports the optical fiber component to be placed on the substrate, so that the component part is not in contact with the other parts of the substrate.

Figure 4b illustrates a clamp 400b according to another preferred embodiment, where the bottom edge 401b is wider than the top part in the sideways direction. This type of clamp can be attached for instance in the support element illustrated in figure 3b. Here the incisions 402b leading to the holes 403 supporting the components are made diagonally, in order to facilitate the placing of the optical fiber components in the clamp. From the point of view of the invention, the size and shape of the clamp holes and the incisions leading thereto is not significant. Thus the clamps are always manufactured to conform to the application in question, so that they have an appropriate number of holes of given sizes, in which the optical fiber components to be inserted are attached in a solid and secure manner without being subjected to any kind of bending or strain at any time. The clamp can be made of for instance foam plastic, soft plastic, rubber, silicone or some other flexible material.

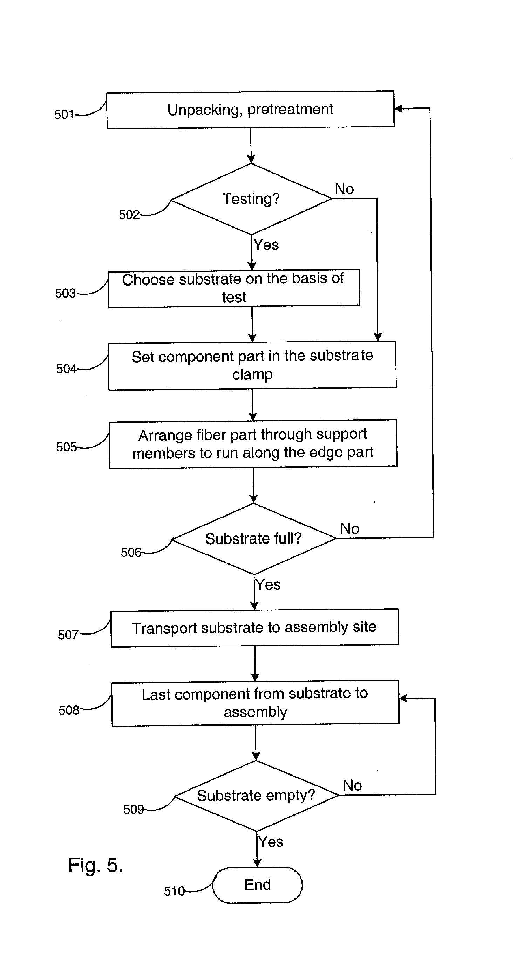

Figure 5 is a flow diagram illustrating a method according to a preferred embodiment of the invention, where optical fiber components are placed on the substrate according to the invention as a specific, separate assembly step. First, step 501, the optical fiber component is unpacked from the package and subjected to a regular pretreatment, whereafter the optical fiber component is ready for use. Each optical fiber component has an optical fiber part of a given length. In case the length of the optical fiber part is not specifically determined, a given default value is used in the pretreatment. Next, step 502, it is found out whether the optical fiber component should be tested. On the basis of the testing, unusable components can be removed already in connection with the pretreatment, before they are set on the substrate and transported to the assembly site. In addition, the person performing the pretreatment step according to the preferred embodiment of the invention typically has several substrates to be filled simultaneously. In that case the optical fiber components are in the testing step advantageously sorted out so that the total attenuation of the optical fiber components on each separate substrate is by average the same in step 503. If testing is not carried out in step 502, there are directly moved on to step 504, where the rigid component part of the optical fiber component is set in the designated place in the clamp provided on the substrate. The clamps are detachable elements, and consequently by changing the clamp on the substrate, there is obtained a transport and processing substrate suitable for exactly a given number of given types of optical fiber components. The optical fiber components are set in the clamp on the substrate in the same order as they are used in the next assembly step. In practice, the first optical fiber component to be set on the substrate is the last to be taken in use from the substrate. Thereafter, in step 505, the optical fiber part attached in the preceding step is arranged, through and by means of the substrate support members to run along the periphery of the bottom area bordered by the edge part. Typically in this step also the serial number of the processed optical fiber component is written down.

In step 506 it is checked whether the substrate in which the previous optical fiber component was set is already full. In case there still are unfilled storage holes for component parts in the substrate clamp, the filling of the substrate is continued from step 501 by a new optical fiber component. In case in step 506 it is observed that the substrate clamp is full, i.e. every storage hole is provided with a component part, the process moves on to step 507. In step 507, one or several filled substrates are delivered to the assembly site, where the proper assembly of the optical fiber components in the device to be compiled is carried out. In step 508, the optical fiber component that was last set on the substrate is removed for assembly. In step 509 it is checked whether all optical fiber components of the substrate are already used. If there are still optical fiber components left on the substrate, step 508 is resumed by removing the optical fiber component that was last set in the substrate for assembly. Thus the optical fiber component that was first set on the substrate is removed last, and the optical fiber component that was last set on the substrate is unpacked first in the assembly step. When the substrate is empty in step 509, the procedure ends according to step 510. In practice the empty substrates are collected and returned to a location from where they are transmitted to be reused.

According to the invention, there can also be manufactured substrates of various sizes and shapes, provided with support elements of different lengths and a varying number of support members. Moreover, the stationary parts of the substrate can be placed on the substrate so that the best possible support is obtained for the optical fiber components. On one substrate, there are collected the optical fiber components needed for one product. Now the optical fiber components can already in the testing step be arranged as suitable combinations for they final product. This makes serial production remarkably more efficient, and the quality is maintained more homogeneous. In addition, the optical fiber components arranged on the substrate can be fed into an automated device, for instance to a fiber splicing cell that handles pretreated components. Moreover, when necessary, optical fiber components can be transported for instance from one workplace to another by means of the substrate according to the invention.

## Claims

1. A substrate for temporarily storing optical fiber components comprising a component part and an optical fiber part for a given assembly step, said substrate including a bottom part (11), **characterized in that** on the bottom part there is attached
- a clamp (400, 400b) provided with holes (403, 403a, 403b, 403c, 403d) conforming to the component parts to be placed therein, in order to support the component parts to be set on the substrate, and
- a support member (13) for supporting and guiding the optical fiber parts to be set on the substrate.

2. A substrate according to claim 1, **characterized in that** on the bottom part, there is attached an edge part (12) for defining the area of the bottom part to be used for storing the optical fiber components.

3. A substrate according to claim 2, **characterized in that** in the area (11a), located outside the bottom part area defined by the edge part (12), there is provided a stacking pin (16), and on the opposite surface of the substrate there is provided a pin hole (17), so that when two of said substrates are stacked on top of each other, the stacking pins (16) provided in the lower substrate are arranged to fit in the pin holes (17) provided in the upper substrate.

4. A substrate according to claim 1, **characterized in that** the clamp supporting the component part is detachable, and that in the bottom part, there is attached an elongate support element (14) in order to fasten the detachable clamp, supporting the component part, to the substrate.

5. A substrate according to claim 4, **characterized in** the elongate support element (14) is provided with a fastening arrangement (143, 144) for detachably fastening the component-supporting clamp (400, 400b) into it.

6. A substrate according to claim 4, **characterized in that** the detachable clamp (400, 400b) is provided with holes (403, 403a, 403b, 403c, 403d) conforming to the component parts to be set therein, with slots (402, 402b) leading to said holes and a fastening arrangement (401, 401b) for fastening the clamp (400, 400b) to the support element (14).

7. A substrate according to claim 1, **characterized in that** the support member (13) is provided with a storage part (132, 132b) for storing the optical fiber part and an slot part (131, 131b) for setting the optical fiber part into the storage part (132, 132b) and for removing it therefrom.

8. A substrate according to claim 1, **characterized in that** the clamp (400, 400b) is provided with holes (403, 403a, 403b, 403c, 403d) conforming to the component parts to be set therein and with slots (402, 402b) leading to said holes.

9. A substrate according to claim 1, **characterized in that** the holes (403, 403a, 403b, 403c, 403d) provided in the clamp (400, 400b) and conforming to the component parts to be set therein are arranged in the same order where the optical fiber components are used in the next assembly step.

10. A method for assembling a device containing optical fiber components comprising a component part and an optical fiber part by means of a substrate supporting the optical fiber parts, **characterized in that** the method includes steps where
- the component parts (504) are set in a supporting clamp (400, 400b) provided on the substrate,
- the optical fiber parts (505) are set in the support members (13) provided on the substrate for supporting and guiding the optical fiber parts,
- the substrate containing optical fiber components is transported to an assembly site (507), and
- on the assembly site, from the substrate there is first removed the optical fiber component that was last set on the substrate for the assembly step (508).

11. A method according to claim 10, **characterized in that** the optical fiber components are tested (502) prior to being set on the substrate.

12. A method according to claim 11, **characterized in that** the employed substrate is chosen on the basis of the testing (503) of the optical fiber components, so that the total attenuation of the optical fiber components contained by each substrate is optimal.

13. A method according to claim 10, **characterized in that** on one substrate, there are placed the optical fiber components needed in a given assembly step.

14. A method according to claim 10, **characterized in that** the assembly step of the optical fiber components placed on the substrate is carried out by means of an automation device.

15. A method according to claim 10, **characterized in that** for the assembly step, the optical fiber components are removed from the substrate in the same order as they were placed on the substrate, but so that the optical fiber component that was first placed on the substrate is the last to be removed from the substrate.
